# EUROPÄISCHE PATENTSCHRIFT

(11) **EP 0 473 737 B1**
(45) Veröffentlichungstag und Bekanntmachung des Hinweises auf die Patenterteilung: **07.09.1994**
(21) Anmeldenummer: 91904687.0
(22) Anmeldetag: 05.03.1991
(51) Int. Cl.: F16J 15/26, F16J 15/56, F16J 9/20, F02F 5/00

(54) **STOPFBUCHSENDICHTUNG FÜR KOLBENSTANGEN**
STUFFING BOX SEAL FOR PISTON RODS
JOINT PRESSE-GARNITURE POUR TIGES DE PISTON

(30) Priorität: 23.03.1990 CH 986/90
(43) Veröffentlichungstag der Anmeldung: 11.03.1992
(73) Patentinhaber: MUELLER & BRAUCHLI AG., CH-8472 Ohringen (CH)
(72) Erfinder: MÜLLER, Urs, CH-8442 Hettlingen (CH)
(74) Vertreter: Feldmann, Clarence Paul
(86) Internationale Anmeldenummer: CH9100052
(87) Internationale Veröffentlichungsnummer: WO9114890

(56) Entgegenhaltungen:
- EP-A- 0 139 965
- DD-A- 269 195
- DE-A- 2 443 299
- DE-A- 2 702 428

## Beschreibung

Die vorliegende Erfindung betrifft eine Stopfbuchsendichtung für Kolbenstangen von Brennkraftmaschinen mit einer oberen kolbenseitigen Dichtzone und einer zweiten kurbelgehäuseseitigen Dichtzone. Stopfbuchsendichtungen dieser Art sind insbesonders für Schiffsdieselmotoren bekannt. Diesbezüglich wird insbesondere auf die DE-B-21'14'152 der Maschinenfabrik Augsburg-Nürnberg AG hingewiesen. Eine Variante ist in der EP-A-0'138'443 bzw. DE-A-27 02 428 beschrieben.

Das Pflichtenheft jeder Stopfbuchsendichtung enthält mehrere Hauptbedingungen, wie z.B. bestmögliche Trennung von Kurbel- und Zylinderöl, das heisst gute Abstreifung des sauberen Kurbelöls von unten und gute Abstreifung des verschmutzten Zylinderöls von oben, gute Abdichtung der Druckstösse vom Kreuzkopf, um ein Mitreissen des Oels zu verhindern und eine gute Abdichtung des Spülluftdruckes oben, lange Lebensdauer, gutes Funktionieren auch bei extremen Bedingungen wie z.B. bei Bränden im Spülluftraum, Reduktion der Oelverluste, sowie möglichst geringer Verschleiss an der Kolbenstange.

Zur Erreichung einer hohen Dichtigkeit und Abstreifwirkung müssen die Dicht- und Abstreifringe exakt an der Kolbenstange anliegen. Dies lässt sich erreichen indem man die Ringe aus einem relativ flexiblen Meterial ferigt, das sich auch an Kolbenstangen mit Unteramass exakt und ohne Einlaufen anpasst. Zudem müssen die Schnittstellen so ausgelegt sein, dass kein direkter Fluss über den Ring möglich ist.

Die herkömmlichen Abstreifringe sind aus Metall gefertigt, mehrteilig und mit geraden Schnittstellen. Solche Ringe passen sich schlecht und nur mit grosser Federkraft der exakten Form der Kolbenstange an und erzeugen dabei einen starken Abrieb, an Ringen und Stange insbesonders während der Anlauf- und Einlaufzeit und vor allem im unteren und oberen Totpunkt. Ferner führt dieser metallische Abrieb aber auch zu gewissen Kratzspuren, die nun wiederum die Dichtung vermindern.

Die Lebensdauer solcher Dichtungen ist insbesondere von der Schmierung abhängig. Die Schmierung erfolgt hier, durch die entsprechende Kriechleckage entlang der Kolbenstange. Diese für die Schmierung wesentliche Leckage führt jedoch zu einem erheblichen Mehrverbrauch des Oels. Ueblicherweise haben metallische Dichtringe drei oder mehr Trennfugen. Auch dies führt wiederum zu einer Verminderung der Dichtigkeit.

In der DE-A-23'51'850 (G. Espey] wurde erstmals vorgeschlagen, Abstreifringe einteilig und auselastischem Material zu fertigen. Insbesondere Dicht- und Abstreifringe gemäss der EP-A-0'139'965 wurden in Stopfbuchsendichtungen für Kolbenstangen eingesetzt. Solche Dicht- bzw. Abstreifringe wurden in Stopfbuchsendichtungen lediglich in geringer Anzahl und nur in der unteren, kurbelgehäuseseitigen Dichtzone eingesetzt. Obwohl die Dichtigkeit hiermit verbessert wurde, vermochte sich diese Lösung trotzdem nicht durchzusetzen, da die Lebensdauer der metallischen, oberen Stopfbuchsendichtungen unbefriedigend war und der Verschleiss an den Stangen grösser wurde.

Es ist nunmehr die Aufgabe der vorliegenden Erfindung, Stopfbuchsendichtungen der eingangs genannten Art derart zu verbessern, dass unter Beibehaltung oder gar Verbesserung der Dichtheit auch bei Stangen mit Untermass die Lebensdauer erhöht, der Oelverbrauch gesenkt, der Verschleiss an Ringen und Stangen reduziert, die Montage und der Unterhalt, sowie die Ersatzteilhaltung vereinfacht wird.

Diese anspruchsvolle Aufgabe löst eine Stopfbuchsendichtung, der eingangs genannten Art mit den kennzeichnenden Merkmalen des Patentanspruches 1.

Aus Festigkeits- und Temperaturüberlegungen ging man bisher davon aus, dass es nur sinnvoll sei , nur die dem Kurbelgehäuse nächstliegenden Dichtungen aus Kunststoff zu fertigen. Vesuche haben nun aber gezeigt, dass Stopfbuchsendichtungen dieser Art eine unerklärlich kurze Lebenserwartung haben, und auch die Gegenlauffläche grossem Verschleiss unterworfen ist. Die Anmelderin hat mit entsprechend aufwendigen Messungen festgestellt, dass die Dichtigkeit der aus Kunststoff gefertigten einteiligen Dicht- und Abstreifringe so hoch ist, dass die darüber liegenden aus Metall gefertigten Dicht- und Abstreifringe ungenügend geschmiert werden.

Entsprechend stellte sich ein erhöhter Abrieb, dadurch erhöhte Lekage und somit kürzere Lebensdauer der Stopfbuchsendichtung ein. Entgegen der Erwartungen der Fachwelt hat sich nun erwiesen, dass eine Stopfbuchsendichtung mit den Merkmalen des Patentanspruches 1 zu einer besonders hohen Effizienz und Lebensdauer führt und dadurch einen sehr geringen Oelverlust bewirkt, was einerseits durch die Dichtigkeit der Stopfbuchsendichtung zu erklären ist, anderseits auf den verminderten Schmierbedarf der Ringe.

In der beiliegenden Zeichnung sind zwei Ausführungsbeispiele des Erfindungsgegenstandes, sowie einige Details dargestellt und anhand der nachfolgenden Beschreibung erläutert. Es zeigt.
- Figur 1: einen Vertikalschnitt durch die Stopfbuchsendichtung eines Dieselmotors mit Führungsring und getrennter unterer und oberer Abdichtung; und
- Figur 2: einen Teillängsschnitt durch eine Variante einer Stopfbuchse für einen anderen Schiffsdieselmotor ohne Führungsring;
- Figur 3: einen dreiteiligen Feuerhemmring, in der Aufsicht; und
- Figur 4: einen Querschnitt in vergrössertem Massstab;
- Figur 5: einen diametralen Schnitt durch einen Abstreifring; und
- Figur 6: wiederum ein Querschnitt in vergrössertem Massstab im Bereich des Stosses;
- Figur 7: wiederum ein Diametralschnitt durch einen Dichtungsring ;
- Figur 8: einen vergrösserten Querschnitt im Bereich des Stosses.

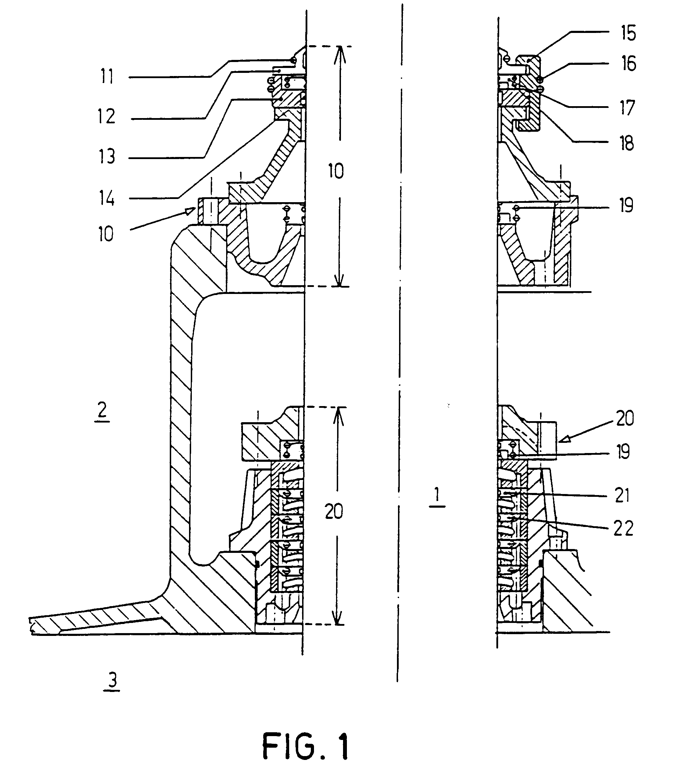

In Figur 1 ist ein Ausführungsbeispiel einer Stopfbuchsendichtung für einen Schiffsdieselmotor im Vertikalschnitt dargestellt. Die Anordnung entspricht einem Schiffsmotor der Firma Gebrüder Sulzer AG in Winterthur. Zentral erkennt man die vertikal verlaufende Kolbenstange 1, die vom Kurbelgehäuse 3 in den kolbenseitigen Spülluftraum 2 führt. Von der Struktur her erkennt man deutlich zwei Dichtzonen, nämlich eine erste, kolbenseitige Dichtzone 10 und eine zweite, kurbelgehäuseseitige Dichtzone 20. Bei anderen Typen der Firma Sulzer ändert z.B. die Anzahl der Ringe, das Prinzip hingegen bleibt sich gleich.

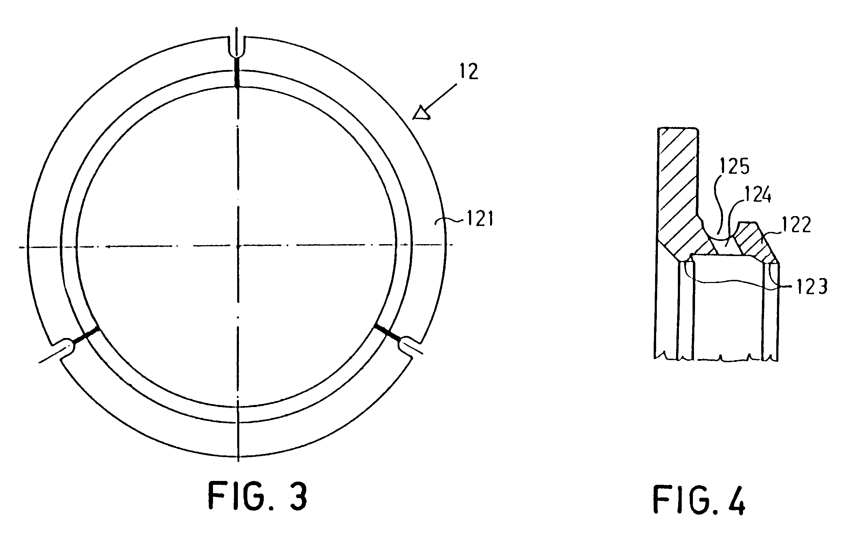

In der oberen, kolbenseitigen Dichtzone 10 erkennt man zuoberst einen Grobabstreifer 12, der als Feuerhemmring dient und aus Metall gefertigt ist. Dieser Ring wird anhand der Figuren 3 und 4 noch näher beschrieben. Der Feuerhemmring liegt auf einem Kammerring 13 peripher auf. Unter dem Grobabstreifer 12 liegt eine obere sogenannte "floating" Abstreifdichtung 17. Unter der oberen Abstreifdichtung 17 liegt ein Führungsring 14 in einer Nut des Kammerringes 13. Klammern 15 halten diese obere Dichtungspackung zusammen. Der mehrteilige, hier dreiteilige Grobabstreifer wird von einer ein- oder mehrteiligen Zugfeder in radialer Richtung zusammengehalten. Gleiche Zugfedern wie die soeben beschriebene Zugfeder 11 sind auch um den Führungsring 13 gelegt und überqueren die Klammern 15.

Beim herkömmlichen Sulzer System wird die Innenseite des Kammerringes 13 mit Weissmetall ausgegossen, bearbeitet und dient dadurch als Führungsring. Obwohl nur diese Zone dem Verschleiss unterworfen ist, muss jeweils der ganze Ring ausgewechselt, zur Servicestelle geschickt, die Weissmetallschicht maschinell entfernt und wieder neu aufgegossen werden, was mit erheblichem Aufwand verbunden ist. Um diesen Aufwand zu umgehen, werden diese Ringe meistens weggeworfen und durch neue ersetzt, was wiederum sehr kostspielig ist.

Die der Erfindung zugrundegelegte Idee beruht darauf, einen einteiligen, auf einfache Art und Weise, an Ort und Stelle auswechselbaren Führungsring aus einem selbstschmierenden Material in eine entsprechende Nute einzulegen, wobei der Kammerring aus Stahl (13) immer wieder verwendet werden kann.

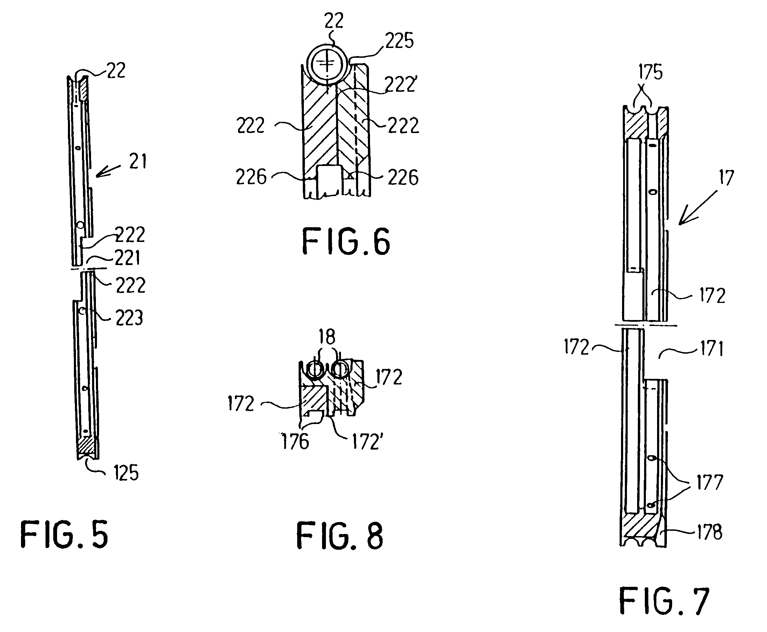

Unterhalb diesem ersten Dichtungspaket ist eine weitere Abstreifdichtung 19 vorgesehen. Eine gleichartige Abstreifdichtung 19 liegt zuoberst in der unteren, kurbelgehäuse-, beziehungsweise kreuzkopfseitigen Dichtzone 20. Unterhalb dieser Abstreifdichtung 19 sind mehrere Abstreifringe 21, die wiederum mit Zugfedern 22 zusammengedrückt werden, angeordnet. In den Figuren 7 und 8 ist ein Beispiel einer Abstreifdichtung entsprechend jenen mit den Bezugszahlen 17 und 19 im Detail dargestellt. Die detaillierte Darstellung der Abstreifringe 21 erkennt man in den Figuren 5 und 6.

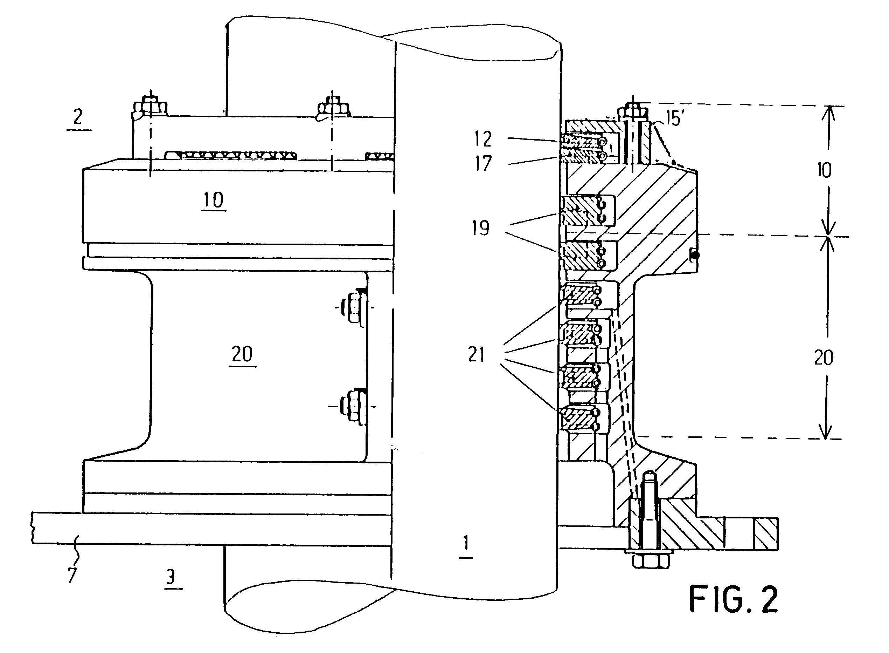

Das Prinzip der zweiten Ausführungsform gemäss der Figur 2 entspricht einer Anwendungsvariante, die z.B. für Schiffsmotoren der Firmen Burmeister & Wain, Kobe, MAN etc. geeignet ist. Die Kolbenstange 1 gleitet durch den Zwischenboden 7, die das Kurbelgehäuse 3 von der kolbenseitigen Spülluftkammer 2 trennt. Auch hier erkennt man, wenn auch weniger deutlich wie beim erstgenannten Beispiel, einen erste Dichtzone 10 und eine zweite, kurbelgehäuseseitige Dichtzone 20. Die gesamte Stopfbuchsendichtung ist in einem zweigeteilten Packungsgehäuse untergebracht, die auf dem Zwischenboden 7 festgeschraubt ist. Oberhalb dieses Gehäuses und auf demselben aufliegend, ist wiederum ein mehrteiliger, metallener Grobabstreifer 12 mit einer darunterliegenden Abstreifdichtung 17 angeordnet. Der Grobabstreifer 12 ist wiederum aus Metall gefertigt und schützt zusammen mit den Niederhalterring 15', die darunter liegenden Abstreifdichtungen 17 und 19 aus Kunststoff gegen die im Spülluftraum 2 herrschende Hitze und eventuell vorhandenen Flammen. Der hier eingesetzte Grobabstreifer, der als Feuerhemmring dient, hat einen gegenüber den Figuren 3 und 4 dargestellten Ausführung geänderte Querschnittsform. Die Dichtringe 17 und 19, sowie die Abstreifringe 21 in der zweiten Dichtzone 20 entsprechen in der Form genau jenen, die in der Ausführungsvariante gemäss der Figur 1 eingesetzt werden.

Der in Figur 3 in Aufsicht dargestellte Grobabstreifer 12, besteht aus drei Segmenten 121. Der Innendurchmesser des Grobabstreifers 12 ist etwas grösser als der Durchmesser der Kolbenstange 1. Ist der Grobabstreifer 12 in der Stopfbuchsendichtung montiert, so liegt er nirgends an der Kolbenstange 1 an, sondern ungibt diesen mit einem geringen Spiel . Der als Feuerhemmring dienende Grobabstreifer 12 hat einen L-förmigen Querschnitt. Der parallel zur Kolbenstange verlaufende Schenkel 122 ist mit zwei parallel und in Abstand zueinander verlaufenden Abstreifkanten 123 versehen. Zwischen den beiden Abstreifkanten 122 sind in regelmässigen Abstand mehrere nach aussen gerichtete Ablaufbohrungen 124 vorgesehen. Diese Bohrungen 124 dienen dem Abfluss des abgestreiften Oels und der Schmutzpartikel. Der Schenkel 122 ist aussen mit einer Nut 125 versehen, die einen halbkreisförmigen Querschnitt hat. In dieser Ringnut wird eine ein- oder mehrteilige Zugfeder, mittels dem die einzelnen Segmente 121 zusammengehalten und gegeneinander gepresst werden, gelegt. In den Figuren 1 und 2 sind diese Federn im Schnitt erkennbar. Zur Erhöhung der Dichtigkeit können die Abstreifkanten 123 noch mit konzentrisch verlaufenden Rillen versehen sein, die gleich einer Labyrinthdichtung wirken.

Der Abstreifring 21, der in Figur 5 im Diametralschnitt dargestellt ist, ist vollständig aus Kunststoff gefertigt. Vorzugsweise wird man hierzu Poly-tetra-fluor-aethylen PTFE verwenden. Der Ring ist hier einstückig und lediglich einseitig durch einen Stoss 221 getrennt. Die bekannte einteilige Fertigung der Abstreifringe wird insbesondere bevorzugt, weil die Montage handlicher und damit die Montagezeit verkürzt wird. Der Trennstoss 221 wird durch zwei sich überlappende Teile 222 geschlossen. Zwischen den beiden Teilen 222 liegt folglich eine Trennfläche 222'. Die Trennfläche 222' mündet auf der Innenseite im Bereich zwischen zwei randständigen, ringförmigen Abstreiflippen 226. Auf der Aussenseite mündet die Trennfläche 222' in eine umlaufende ringförmige Nut 225, in der die umlaufende Zugfeder 22 liegt. Es ist wesentlich, dass die Trennfläche 222' des Stosses ausserhalb der Mitte zwischen den beiden Dichtlippen 226 verläuft und somit ausserhalb der Mitte der umlaufenden Nut 125 zu liegen kommt. Hierdurch wird vermieden, dass die Zugfeder 22 die beiden Teile 222 auseinanderdrückt und damit die Dichtigkeit des Ringes zerstört und ein Klemmen in der Nut verursacht.

Die in Figur 7 wiederum im Diametralschnitt dargestellte Abstreifdichtung 17 gleicht im Aufbau genau dem Abstreifring 21 wie zuvor beschrieben mit Ausnahme dass der Stoss gasdicht ist. Auch dieser Ring ist aus PTFE gefertigt. Auch hier erkennt man wieder die Trennfuge, bzw. Stoss 171, die, bzw. der durch die beiden sich überlappenden Teile 172 gedichtet wird. Die Trennfläche 172 verläuft hier in einer mittleren Abstreifkante 176. Der breitere Dichtungsring 17 weist drei parallel verlaufende Abstreifkanten 176 auf. Am Aussenumfang sind hier auch zwei ringförmige Nuten 175 in die entsprechende Federn 18 zu liegen kommen. Zwischen je zwei benachbarten Abstreifkanten 176 sind wiederum Oelablaufbohrungen 177 vorgesehen. Der Dichtring 17 stellt eigentlich eine Kombination eines Dicht- und Abstreifringes dar. Dabei ist die in der Zeichnung rechte Seite, die Abstreifseite mit den Oelablaufbohrungen, während die linke Seite die Dichtungsseite ist, in der keine Bohrungen vorgesehen sind. Damit auch bei einer dichten Packung mehrerer Abstreifringe das abgestreifte Oel abfliessen kann sind an der Aussenfläche schräg nach hinten verlaufende Aussparungen 178 angebracht.

## Patentansprüche

1. Stopfbuchsendichtung für Kolbenstangen (1) von 2-Takt-Dieselmotoren mit einer oberen kolbenseitigen Dichtzone (10) und einer unteren kreuzkopf-, beziehungsweise kurbelgehäuseseitigen Dichtzone (20), dadurch gekennzeichnet, dass die obere Dichtzone kolbenseitig von einem metallenen, mehrteiligen Grobabstreifer (12) begrenzt ist, der als Feuerhemmring dient und federunbelastet die Kolbenstange mit geringem Spiel umgibt, während die darunter liegenden Dichtringe (17,19) und Führungsring (14) aus Kunststoff sind, und dass ferner sämtliche Dicht- und Abstreifringe (19,21) der unteren Zone ebenfalls aus Kunststoff sind.

2. Stopfbuchsendichtung nach Anspruch 1, dadurch gekennzeichnet, dass die zur Kolbenstange (1) gerichtete Gleitfläche des Führungsringes (14) mit mehreren in der Kolbenstangenlängsrichtung verlaufenden Entlastungsnuten versehen ist.

3. Stopfbuchsendichtung nach Anspruch 1, dadurch gekennzeichnet, dass die Dichtringe (17,19) einteilig gefertigt sind.

4. Stopfbuchsendichtung nach Anspruch 1, dadurch gekennzeichnet, dass die Dichtringe (17,19) mit einem einfachen oder doppelwirkenden, gasdichten Stoss (172) versehen sind.

5. Stopfbuchsendichtung nach Anspruch 1, dadurch gekennzeichnet, dass die Abstreifringe (21) mit zwei Abstreifkanten (226) versehen sind.

6. Stopfbuchsendichtung nach Anspruch 1, dadurch gekennzeichnet, dass die Abstreifringe (21,22) im Bereich der Trennfuge mit einem überlappenden Stoss versehen sind.

7. Stopfbuchsendichtung nach Anspruch 4, dadurch gekennzeichnet, dass die Trennfläche (172') des Stosses im Ueberlappungsbereich in der mittleren Dichtlippe (176) verläuft.

8. Stopfbuchsendichtung nach Anspruch 5 und 6, dadurch gekennzeichnet, dass die Trennfläche (222') des Stosses im Ueberlappungsbereich ausserhalb der Mitte zwischen den beiden Abstreifkanten (226) verläuft.

9. Stopfbuchsendichtung nach Anspruch 1, dadurch gekennzeichnet, dass der Grobabstreifer (12) zwei parallele Abstreifkanten (123) hat, in denen Rillen angebracht sind, die eine Labyrinthdichtung bilden, und dass zwischen den Abstreifkanten (123) Ablaufbohrungen (124) angeordnet sind.

10. Stopfbuchsendichtung nach Anspruch 1, dadurch gekennzeichnet, dass die Dicht- und Abstreifringe (17,19,21) zwischen ihren Abstreifkanten (176,226) Oelablaufbohrungen (177,223) aufweisen und auf ihrer Aussenseite schräg nach hinten verlaufende Aussparungen (178) haben zum Abführen des abgestreiften Oels.

## Claims

1. Stuffing box seal for piston rods (1) of 2-stroke diesel engines with an upper, piston-side sealing region (10) and a lower, crosshead or crankcase side sealing region (20), characterised in that the upper sealing region is bounded on the piston side by a metallic, multiple-port coarse stripper (12) acting as a fire-retardant ring and surrounding the piston rod without spring loading and with slight play, while the packing rings (17,19) located below it and the guide ring (14) are made of plastic, and in that all the packing and stripper rings (19,21) in the lower sealing region are also of plastic.

2. Stuffing box seal according to claim 1, characterised in that the sliding surface of the guide ring (14) facing towards the piston rod (1) has several bypass grooves running in the longitudinal direction of the piston rod.

3. Stuffing box seal according to Claim 1, characterised in that the packing rings (17,19) are made in one piece.

4. Stuffing box seal according to Claim 1, characterised in that the packing rings (17,19) have a single or double-acting gas-tight joint (172).

5. Stuffing box seal according to Claim 1, characterised in that the stripper rings (21) have two stripping edges (226).

6. Stuffing box seal according to Claim 1, characterised in that the stripper rings (21,22) have an overlapping joint at their split joints.

7. Stuffing box seal according to claim 4, characterised in that the interface (172') of the joint in the overlap area is located in the middle sealing lip (176).

8. Stuffing box according to Claims 5 and 6, characterised in that the interface (222') of the joint in the overlap area is located off-centre between the two stripping edges (226).

9. Stuffing box seal according to claim 1, characterised in that the coarse stripper (12) has two parallel stripping edges (123) in which are grooves forming a labyrinth seal, and in that drain holes (124) are provided between the stripping edges (123).

10. Stuffing box seal according to Claim 1, characterised in that the packing and stripper rings (17,19,21) have oil drain holes (177, 223) between their stripping edges (176, 226), and have on their outer sides recesses (178) running obliquely towards the back to provide drainage for the stripped oil.

## Revendications

1. Joint presse-garniture pour tiges de piston (1) de moteurs diesel à 2 temps avec une zone d'étanchéité supérieure (10) du côté du piston et une zone d'étanchéité inférieure (20) du côté de la crosse du piston, respectivement du côté du carter, caractérisé en ce que la zone d'étanchéité supérieure est limitée du côté du piston par un gratteur d'huile grossier (12) métallique à plusieurs pièces, qui sert de bague coupe-feu et entoure sans sollicitation par ressort la tige de piston avec un faible jeu, tandis que les bagues d'étanchéité (17, 19) se trouvant en-dessous et la bague de guidage (14) sont en plastique, et qu'en outre toutes les bagues d'étanchéité et de grattage (19, 21) de la zone inférieure sont également en plastique.

2. Joint presse-garniture selon la revendication 1, caractérisé en ce que la surface de roulement de la bague de guidage (14) orientée vers la tige de piston (1) est pourvue de plusieurs cannelures d'allègement s'étendant dans la direction longitudinale des tiges de piston.

3. Joint presse-garniture selon la revendication 1, caractérisé en ce que les bagues d'étanchéité (17, 19) sont fabriquées en une seule pièce.

4. Joint presse-garniture selon la revendication 1, caractérisé en ce que les bagues d'étanchéité (17, 19) sont pourvues d'un joint (172) simple ou double étanche aux gas.

5. Joint presse-garniture selon la revendication 1, caractérisé en ce que les bagues de grattage (21) sont pourvues de deux arêtes de grattage (226).

6. Joint presse-garniture selon la revendication 1, caractérisé en ce que les bagues de grattage (21, 22) sont pourvues d'un joint à recouvrement dans le domaine de la ligne de joint.

7. Joint presse-garniture selon la revendication 4, caractérisé en ce que la surface de séparation (172') du joint dans le domaine de recouvrement s'étend dans la lèvre d'étanchéité médiane (176).

8. Joint presse-garniture selon la revendication 5 et 6, caractérisé en ce que la surface de séparation (222') du joint dans le domaine de recouvrement s'étend hors du milieu entre les deux arêtes de grattage (226).

9. Joint presse-garniture selon la revendication 1, caractérisé en ce que le gratteur d'huile grossier (12) a deux arêtes de grattage (123) parallèles, dans lesquelles des gorges sont formées, formant une garniture à labyrinthe, et en ce que des trous d'écoulement sont disposés entre les arêtes de grattage (123).

10. Joint presse-garniture selon la revendication 1, caractérisé en ce que les bagues d'étanchéité et de grattage (17, 19, 21) présentent des trous d'écoulement d'huile (177, 223) entre leurs arêtes de grattage (176, 226) et ont sur leur côté externe des évidements (178) s'étendant en diagonale vers l'arrière, pour évacuer l'huile grattée.
